# EUROPEAN PATENT APPLICATION

(11) **EP 1 569 026 A1**
(43) Date of publication of application: **31.08.2005**
(21) Application number: 03810582.1
(22) Date of filing: 24.09.2003
(51) Int. Cl.: G02B 27/22, G09F 19/14, G03B 35/24, G09F 9/00

(54) **IMAGE DISPLAY UNIT**

(30) Priority: 07.11.2002 JP 2002324428
(71) Applicant: SANYO ELECTRIC CO., LTD., Osaka 570-8677 (JP)
(72) Inventor: MASHITANI, Ken, Neyagawa-shi Osaka 572-0839 (JP); HAMAGISHI, Goro, Toyonaka-shi Osaka 561-0802 (JP)
(74) Representative: Read, Matthew Charles
(86) International application number: PCT/JP2003/012178
(87) International publication number: WO 2004/042452

(57) **Abstract**

An image display that separates by a separating means respectively different images displayed on a screen so as to be introduced to an observer, and is constituted as a stereoscopic image display, and others. In a case of a four-viewpoint stereoscopic image display, an image ①, an image ②, an image ③, and an image ④ having a binocular parallax in a horizontal direction of the screen are aligned at a predetermined pitch, and a minimum unit image group of this "image ①, image ②, image ③, and image ④" repeatedly exists. One aperture (1) is formed corresponding to the minimum unit image group, and in a contour of each aperture (1), oblique line portions that are non-parallel to the contour of a dot exist.

## Description

### TECHNICAL FIELD

The present invention relates to an image display used for allowing an observer to perform a stereoscopic vision, and allowing a plurality of observers to see different images.

### PRIOR ART

From the past, as a method for realizing a stereoscopic vision display without requiring special glasses, a parallax barrier method, a lenticular lens method, and others are known. These methods are methods in which a right-eye image and a left-eye image having a binocular parallax are displayed on a screen one after the other in a vertical stripe shape, for example, and this displayed image is separated by a parallax barrier, a lenticular lens, and others, and introduced to each of right and left eyes of an observer so as to allow a stereoscopic vision to be performed.

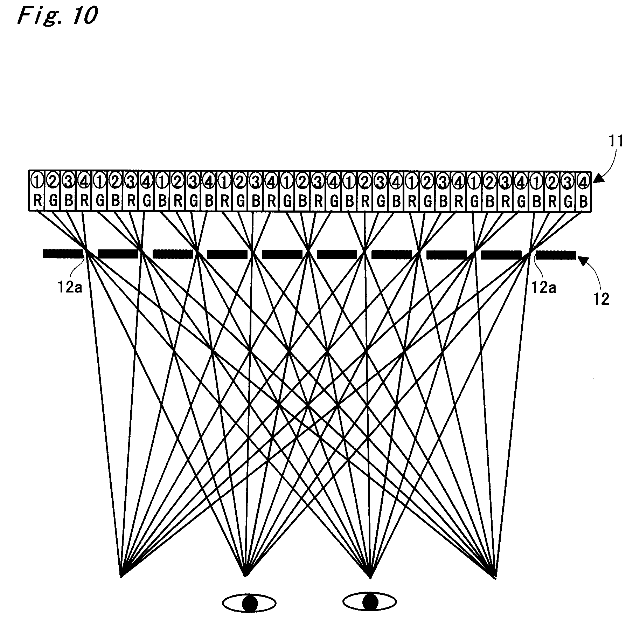

Figure 10 is a descriptive diagram illustrating a principle of a stereoscopic image display of a four-viewpoint stereoscopic vision method. An image ①, an image ②, an image ③, and an image ④ having the binocular parallax are aligned in a horizontal direction of a screen 11 at a predetermined pitch, and a minimum unit image group of the "image ①, image ②, image ③, and image ④" exists repeatedly. Each aperture 12a of a parallax barrier 12 exists corresponding to each minimum unit image group, and separates the "image ①, image ②, image ③, and image ④", i.e., each minimum unit image group, so as to be applied to the observer. This allows the observer to perform the stereoscopic vision.

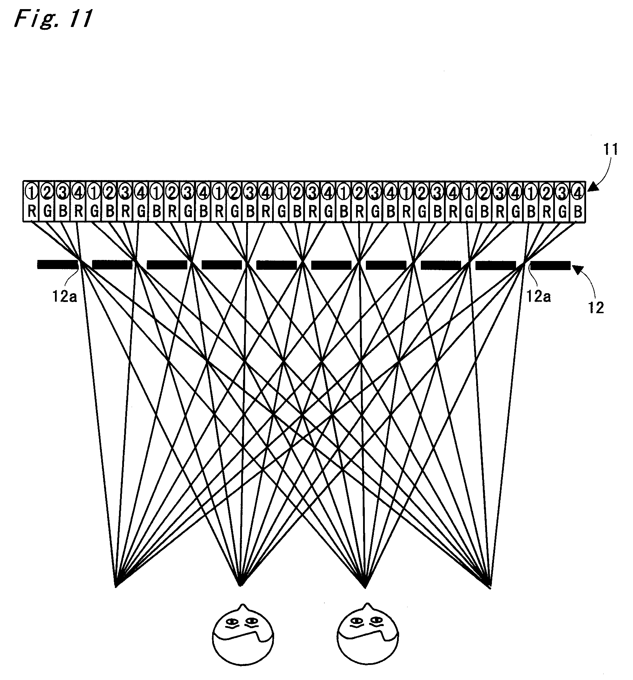

Figure 11 is a descriptive diagram illustrating a principle of an image display allowing each of different observers to see each of four different images. This image display, too, similar to the stereoscopic image display shown in Figure 10, is formed of the screen 11, and the parallax barrier 12. Each aperture 12a of the parallax barrier 12 separates the "image ①, image ②, image ③, and image ④", i.e., each minimum unit image group, so as to be applied to the observer. This results in each observer seeing the different images to one another.

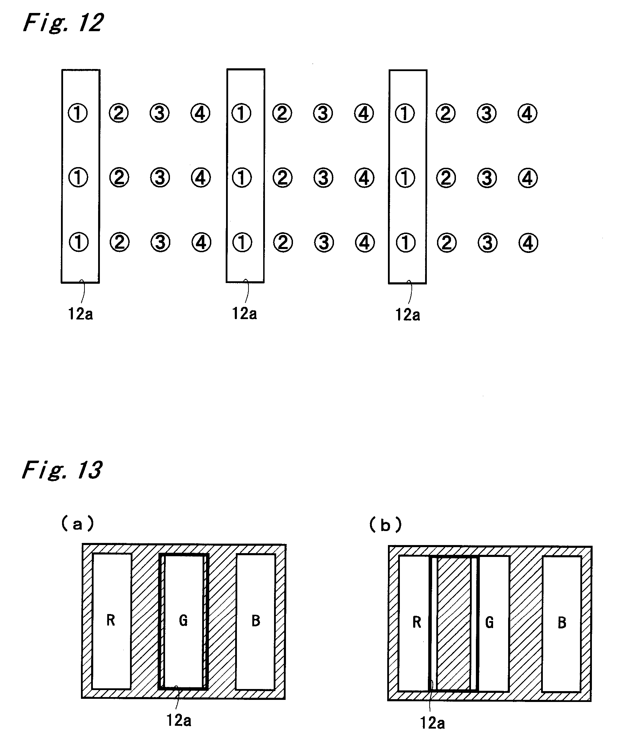

It is noted that in a case of utilizing dots in a vertical direction so as to display the same image, the apertures 12a of the parallax barrier 12, as shown in Figure 12, are generally formed in a vertical stripe shape. In addition, in a case of utilizing the dots in the vertical direction so as to display the same image, the apertures of the parallax barrier are aligned in an oblique direction (see Japanese Patent No. 3096613).

Incidentally, when a light from the dots is applied to an eye of the observer via the aperture 12a of the parallax barrier 12, as shown in Figure 13 (a), a state that the lights of the entire pixels are applied, and a state that, as shown in Figure 13 (b), a non-dot portion is seen are formed. As a result, a mixing of the former, that is, a bright portion, and the latter, that is, a dark portion, makes the observer feel a moire effect.

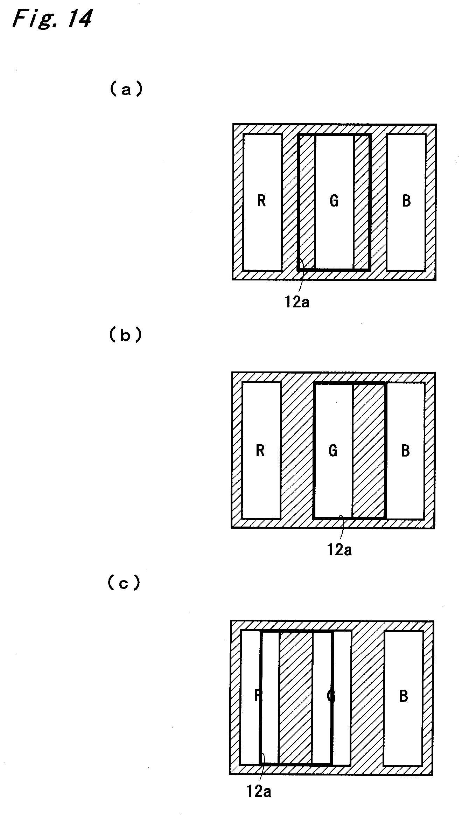

In order to reduce the moire, as shown in Figure 14, the aperture 12a needs to be rendered large. The large aperture 12a, as shown in Figures 14 (a), (b), and (c), even if a position relationship between the dot and the aperture 12a is changed, introduces an approximately same amount of light to the eye of the observer, and therefore, a difference between the bright portion and the dark portion is decreased, thus, the moire is reduced. However, if the large aperture 12a is adopted, a cross-talk is brought about. In particular, on a screen (display) having a dot pitch of about 0.04 millimeters, a width of the aperture 12a needs to be about 0.08 millimeters in order to reduce the moire, and toward such the dot, a relatively large aperture increases the cross-talk. In addition, in the apertures 12a shown in Figure 14, a manner of a diffraction changes in the course of a transition from Figure 14 (a) to 14 (c), thus not possible to sufficiently reduce the moire.

### SUMMARY OF THE INVENTION

In view of the above-described circumstance, it is an object of the present invention to solve by devising an aperture (separating element) of a separating means, and others various kinds of dissatisfaction and inconvenience in an image display.

In order to solve the above-described problem, an image display of the present invention is an image display that separates by a separating means respectively different images displayed on a screen so as to be introduced to an observer, and that one separating element exists corresponding to a minimum unit image group responsible for displaying the different images, and oblique line portions, which are non-parallel to a contour of a dot, exist in a contour of each separating element.

With the above-described configuration, depending on a manner of the oblique line portion, a change of luminance as a result of a relative position between each separating element and the dot being changed is rendered smooth, and thus possible to reduce a moire without rendering the separating element so large. In addition, depending on the manner of the oblique line portion, in a configuration in which the separating means is formed of a liquid crystal panel, as described later, the oblique line portion solves a dissatisfaction and inconvenience in the image display, which includes to prevent a disconnection of a transparent electrode, and so forth.

It may be possible that the minimum unit image groups exist in such a manner as to be deviated in a horizontal direction by each one dot on each line, and the separating elements are formed corresponding to this deviation (Hereinafter, referred to as an oblique barrier configuration in this section).

In the above-described oblique barrier configuration, it is preferred that the number of viewpoints are set to be larger than two, and the separating element has a shape having intervals with dots for another image in an oblique direction wider than intervals with dots for the same image in an oblique direction. Thereby, a leaked light from the dots for another image is easily shielded, thus possible to improve reducing a cross-talk.

In addition, in the above-described oblique barrier configuration, it may be possible that oblique line portions exist on vertical-direction sides, and separating element clusters to be aligned in the oblique direction may be joined to one another. Furthermore, in such the joined structure, the oblique line portions of each separating element are preferably configured in such a manner as not to be aligned on a straight line. On the other hand, it may be configured such that a pitch between dots is equal to or less than 0.08 millimeters, and the oblique line portions of each separating element is aligned on a straight line.

In addition, in the above-described oblique barrier configuration, it may be possible that oblique line portions exist on vertical-direction sides, the separating element clusters to be aligned in an oblique direction are not joined to one another, and the oblique line portions of each separating element are aligned on a straight line.

It may be possible that the minimum unit image groups exist in such a manner as not to be deviated on each line, and the separating elements are formed corresponding to this non-deviation (Hereinafter, referred to as a vertical barrier configuration in this section). In this vertical barrier configuration, it may be possible that oblique line portions exist on vertical-direction sides, and separating element clusters to be aligned in a vertical direction are joined to one another.

It may be possible that the separating element has a rectangular shape, and oblique line portions exist both on the vertical-direction sides and horizontal-direction sides. In addition, the separating element may have curved lines as the oblique line portion.

The oblique line portions are preferably located on dots in all position relationships possibly established by the separating element and the dots, and this enables to average an influence of a diffraction of light, thus being ideal in terms of a moire reduction. In this case, a length of a horizontal component between an upper-side portion center and a lower-side portion center of the separating element may be equal to a horizontal dot pitch. Furthermore, a length of a vertical component between a right-side portion center and a left-side portion center of the separating element may be equal to a vertical dot pitch.

The separating element may be an element formed of the aperture. Or, the separating element may be an element formed of a lens element.

In the above-described oblique barrier configuration, it may be possible that the number of viewpoints is set to be two, the separating mean is formed of a liquid crystal panel and capable of switching between a separation and a non-separation, and as a result of corners of the aperture portion that is the separating portion formed in a transparent electrode portion of the liquid crystal panel being cut-off, the oblique line portions exist. According to the above, corners of each aperture obliquely adjacent are cut-off, thus possible to prevent an isolated portion (disconnected portion) from being created in a transparent electrode portion.

### BRIEF DESCRIPTION OF THE DRAWINGS

Figure 1 is a view showing an embodiment of the present invention, and a descriptive diagram showing an image alignment and apertures of a separating means in an image display;
Figure 2 is a view showing an embodiment of the present invention, and a descriptive diagram showing a dot alignment and apertures of a separating means in the image display;
Figure 3 is a view showing an embodiment of the present invention, and a descriptive diagram showing an image alignment and apertures of a separating means in the image display;
Figure 4 is a view showing an embodiment of the present invention, Figure 4 (a) is a descriptive diagram showing an image alignment, and Figure 4 (b) is a descriptive diagram showing an aperture of a separating means;
Figure 5 is a view showing an embodiment of the present invention, and Figure 5 (a) to Figure 5 (e) are descriptive diagrams, each of which shows an example of an aperture;
Figure 6 is a view showing an embodiment of the present invention, and a descriptive diagram showing an image alignment and apertures of a separating means in the image display;
Figure 7 is a view showing an embodiment of the present invention, and a descriptive diagram showing an image alignment and apertures of a separating means in the image display;
Figure 8 is a view showing an embodiment of the present invention, and a descriptive diagram showing apertures of a separating means in the image display;
Figure 9 is a view showing an embodiment of the present invention, and a descriptive diagram showing apertures of a separating means formed of a liquid crystal panel in the image display;
Figure 10 is a descriptive diagram showing a four-viewpoint stereoscopic image display;
Figure 11 is a descriptive diagram showing an image display capable of introducing each of four different images to each observer;
Figure 12 is a descriptive diagram showing a conventional relationship between a dot alignment and apertures on a screen;
Figure 13 is a descriptive diagram showing a conventional relationship between a dot alignment and apertures on a screen; and
Figure 14 is a descriptive diagram showing a conventional relationship between a dot alignment and an aperture on a screen.

### BEST MODE FOR PRACTICING THE INVENTION

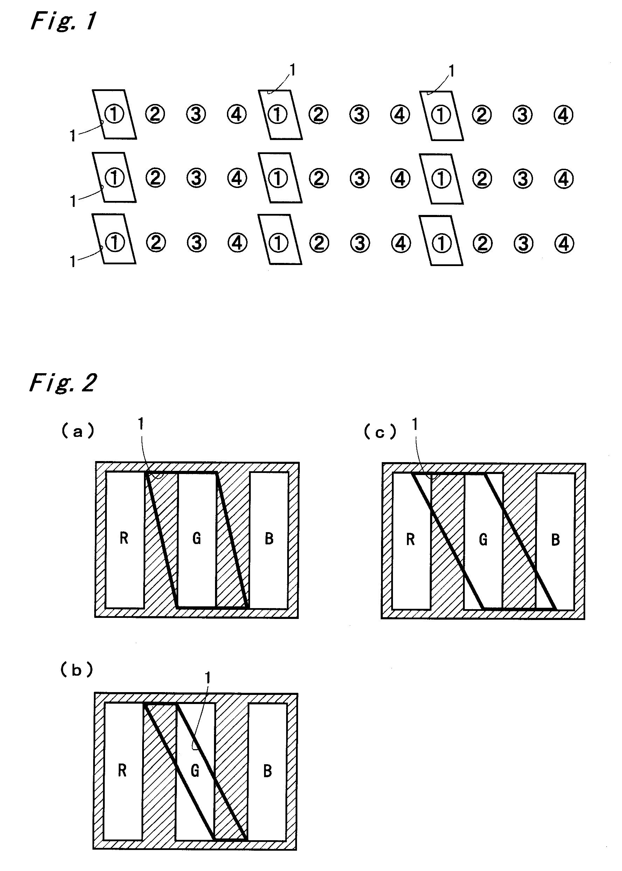

Below, an image display of an embodiment of the present invention will be described based on Figure 1 to Figure 9. It is noted that regarding an entire configuration of the image display, the configurations in Figure 10 and Figure 11 described in the prior art section are adoptable, and in order to avoid a redundancy due to duplicated descriptions, a description of the entire configuration is omitted.

In a configuration shown in Figure 1, four images (dots) of "image ①, image ②, image ③, and image ④", i.e., a minimum unit image group, are repeatedly aligned in a horizontal direction of a screen 1, and the minimum unit image groups exist in such a manner as not to be deviated on each line. One aperture 1 exists corresponding to each minimum unit image group, and in a contour of each aperture 1, as shown in Figure 2, oblique line portions that are non-parallel to a contour of each of the dots (R, G, B). Each aperture 1 shown in Figure 1 and Figures 2 (a), (b), and (c) has a parallelogram shape, and the oblique line portions exist on vertical-direction sides.

In the aperture 1 shown in Figure 2 (a), in a state that the dot exists in the center of the aperture, an upper right corner coincides with an upper right corner of a center dot, a lower right corner coincides with a lower left corner of the adjacent dot on the right, an upper left corner coincides with an upper right corner of the adjacent dot on the left, and a lower left corner coincides with a lower left corner of the center dot. In the aperture 1 shown in Figure 2 (b), in a state that the dot exists in the center of the aperture, an upper right corner coincides with an upper left corner of the center dot, a lower right corner coincides with a lower left corner of the adjacent dot on the right, an upper left corner coincides with an upper right cornmer of the adjacent dot on the left, and a lower left corner coincides with a lower right corner of the center dot. In the aperture 1 shown in Figure 2 (c), in a state that the dot exists in the center of the aperture, an upper right corner coincides with an upper-side center of the center dot, a lower right corner coincides with a lower-side center of the adjacent dot on the right, an upper left corner coincides with an upper-side center of the adjacent dot on the left, and a lower left corner coincides with a lower-side center of the center dot.

In the apertures 1 in Figure 2 (b) and Figure 2 (c), a length of a horizontal component between an aperture upper-side center and an aperture lower-side center coincides with a dot pitch, and the oblique line portions exist on the dots in every state (all position relationships between the aperture and the dot are realized within the aperture), thus possible to average an influence of a diffraction of light. Therefore, it may be said that it is ideal in reducing the moire. In the aperture 1 in Figure 2 (c), an adjacent dot is always seen. However, a proportion of how much the adjacent dot is seen is extremely lower, compared to a case that the dot pitch is 0.04 millimeters and an aperture width is 0.08 millimeters in a configuration in Figure 14. It is noted that it is sufficient to reduce the moire to a level almost scarcely visible by a human eye, thus the configuration in Figure 2 (a) may be possible, and in such the configuration, a reducing effect of the remained cross-talk is enhanced.

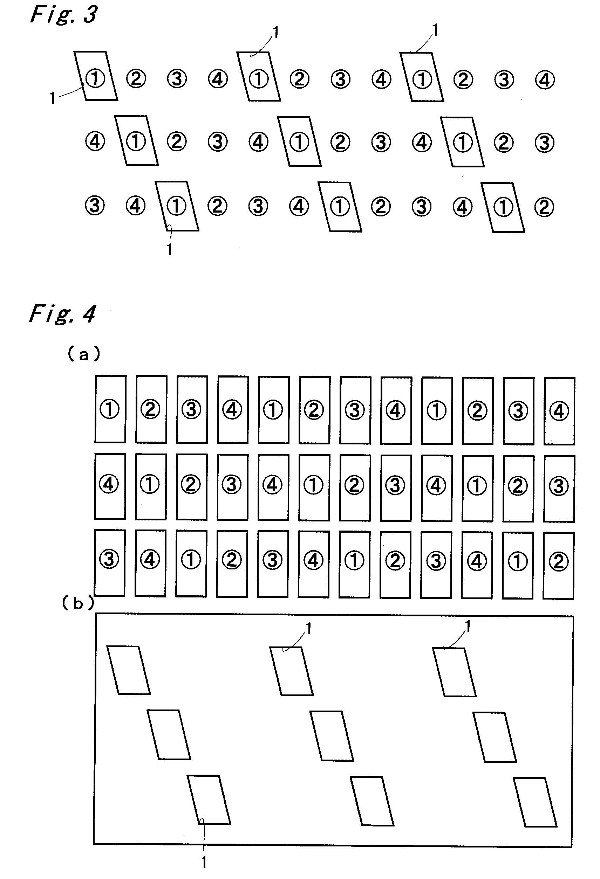

In a configuration shown in Figure 3, the four images (dots) of "image ①, image ②, image ③, and image ④", i.e., the minimum unit image group, are repeatedly aligned in the horizontal direction, and the minimum unit image groups exist in such a manner as to be deviated by each one dot on each line. One aperture 1 exists corresponding to each minimum unit image group, and in order to correspond to the deviation by each one dot, a so-called oblique barrier method is adopted. In addition, Figure 4 (a) shows a dot alignment on a screen in a configuration in Figure 3, and Figure 4 (b) shows a barrier having the apertures 1. As described above, in each apertures 1, the oblique line portions exist on the contour of the aperture, and the apertures 1 shown in Figures 2 (a), (b), and (c) are utilized. In the oblique barrier method, it may be configured that a leaked light from another dot in which an image of a viewpoint far from a certain viewpoint is displayed is difficult to enter (with respect to a dot of the image ①, a dot of the image ③ is the above-described other dot, for example). In a configuration shown in Figure 3, the aperture 1 has the upper left corner and the lower right corner protruding toward a vertical side, and the upper right corner and the lower left corner not protruding, thus possible to prevent the above-described leaked light from being entered thereon.

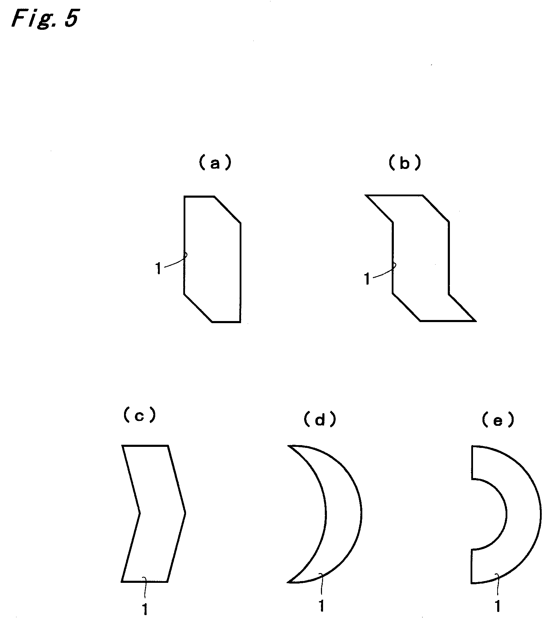

As another aperture capable of preventing the above-described leaked light from being entered, the aperture 1 may adopt shapes shown in Figures 5 (a), and (b). In addition, the aperture 1 may also adopt a shape of a ">" (a certain modified hexagon) as shown in Figure 5 (c). Furthermore, as shown in Figures 5 (d), and (e), the aperture 1 may adopt a shape having curved lines as the oblique line portions, and any oblique line portion that renders smooth a change of luminance as a result of a relative position between each aperture 1 and the dot being changed may be adopted. The apertures 1 from Figure 5 (a) to Figure (e) are also usable in the configuration in Figure 1.

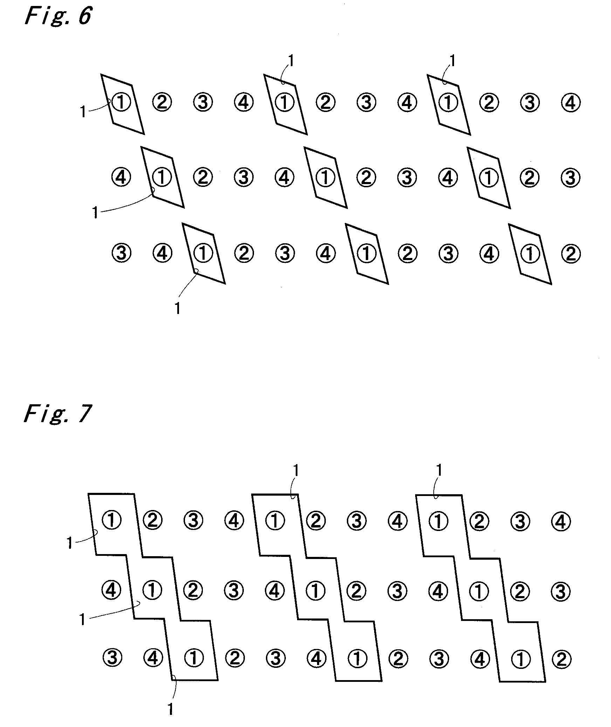

In a configuration shown in Figure 6, the aperture 1 has a rectangular shape, and the oblique line portions exist both on the vertical-direction sides and the horizontal-direction sides. Such the aperture 1 is also usable in the configuration in Figure 1.

In a configuration shown in Figure 7, the oblique line portions exist on the vertical-direction sides of each aperture, aperture clusters 1 ··· to be aligned in the oblique direction are joined to one another, and the oblique line portions of each aperture 1 are not to be aligned on a straight line. It is noted that structure in which the apertures are joined to one another is also applicable to the configuration in Figure 1. In the configuration in Figure 7, the narrower the dot pitch, the smaller an unevenness in positions in which the apertures are joined. It is easier to perform a designing capable of implementing both a cross-talk prevention and a moire prevention in a case that there is the unevenness, albeit small. In a case that the pitch between dots is equal to or less than 0.08 millimeters, it may be configured such that the unevenness in the positions in which the apertures are joined is eliminated, and the apertures are formed in an oblique stripe shape. That is, it may be possible that the pitch between the dots is set to be equal to or less than 0.08 millimeters, and structured that the apertures are joined to one another, and the oblique line portions of each aperture 1 are aligned on a straight line.

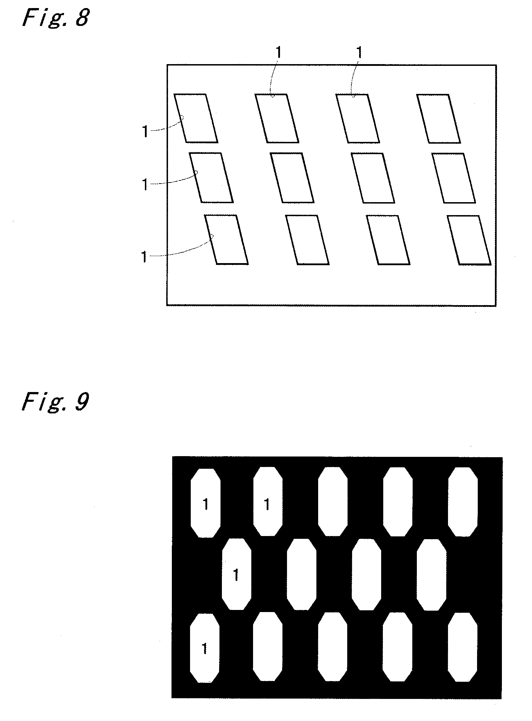

In a configuration shown in Figure 8, it is configured such that the oblique line portions exist on the vertical direction sides of each aperture 1, the aperture clusters 1 ··· to be aligned in the oblique direction are not joined to one another, and the oblique line portions of each aperture 1 are aligned on a straight line. The configuration in Figure 8 is different from the configuration of the oblique stripe, and each aperture 1 is not joined to each other, thus independent to each other. In a case of the oblique stripe, it is not possible to set a condensing position of the vertical direction. However, in the configuration in Figure 8 having the apertures in such a manner as to be independent to one another, it is possible to set the condensing position of the vertical direction. In addition, it is also possible to adjust the condensing position of the vertical direction to the condensing position of the horizontal direction, or deliberately not adjust the condensing position of the vertical direction to the condensing position of the horizontal direction.

A configuration shown in Figure 9 is a configuration in which a barrier state and a non-barrier state are formable by constituting the barrier of the liquid crystal panel, for example, in the oblique dot arrangement shown in Figure 3, and others. In addition, in a case of a two-viewpoint stereoscopic vision configuration, a portion in black in Figure 9 is a transparent electrode forming area, and portions in white are the apertures 1 at a time of the barrier. The aperture 1 is an aperture that has the oblique line portions, and as a result of corners of a square shape being cut-off, and the corners are thus cut-off like this so that it becomes possible to prevent an isolated portion (disconnected portion) from being formed in the transparent electrode portion. It is noted that all corners of the square shape need not always be cut-off, and a shape (see Figure 5 (a)) in which only one pair of corners on the opposite corner is cut-off may be adopted. Needless to say, it may also be possible that the aperture 1 is in a parallelogram shape, and is in a shape in which the corners of the parallelogram are cut-off. By doing so, it is also possible to satisfy both a disconnection prevention and a moire reduction.

It is noted that in the above-described examples, the image separation by the apertures is shown. However, a lens element may be used instead of the aperture. Furthermore, it may be configured such that the separating means is arranged on a light-source side.

As described above, according to the present invention, the oblique line portions exist on the contour of the separating element, and depending on a manner of the oblique line portions, a change of luminance as a result of the relative position between each separating element and the dot being changed is rendered smooth. Thus, it becomes possible to reduce the moire without rendering the separating element not so large (that is, the cross-talk is prevented from increasing). Furthermore, depending on a manner of the oblique line portions, in a two-viewpoint-use configuration in which the separating means is the oblique barrier, and is formed of the liquid crystal panel, the present invention brings about desirable effects such as the oblique line portion preventing the transparent electrode from being disconnected.

## Claims

1. An image display that separates by a separating means respectively different images displayed on a screen, wherein one separating element exists corresponding to a minimum unit image group responsible for displaying said different images, and oblique line portions, which are non-parallel to a contour of dots, exist in a contour of each separating element.

2. An image display according to claim 1, wherein said minimum unit image groups exist in such a manner as to be deviated in a horizontal direction by each one dot on each line, and the separating elements are formed corresponding to this deviation.

3. An image display according to claim 2, wherein the number of viewpoints is set to be larger than two, and said separating element has a shape having intervals with dots for another image in an oblique direction wider than intervals with dots for the same image in an oblique direction.

4. An image display according to claim 2 or claim 3, wherein oblique line portions exist on vertical-direction sides, and the separating element clusters to be aligned in the oblique direction are joined to one another.

5. An image display according to claim 4, configured such that said oblique line portions of each separating element are not aligned on a straight line.

6. An image display according to claim 4, configured such that a pitch between dots is equal to or less than 0.08 millimeters, and said oblique line portions of each separating element are aligned on a straight line.

7. An image display according to claim 2 or claim 3, configured such that oblique line portions exist on vertical-direction sides, separating element clusters to be aligned in the oblique direction are not joined to one another, and said oblique line portions of each separating element are aligned on a straight line.

8. An image display according to claim 1, wherein said minimum unit image groups exist in such a manner as not to be deviated on each line, and the separating element is formed corresponding to this non-deviation.

9. An image display according to claim 8, wherein oblique line portions exist on vertical-direction sides, and separating element clusters to be aligned in a vertical direction are joined to one another.

10. An image display according to any one of claims 1 to 9, wherein said separating element has a rectangular shape, and the oblique line portions exist both on the vertical-direction sides and horizontal-direction sides.

11. An image display according to any one of claims 1 to 8, wherein said separating element has curved lines as the oblique line portions.

12. An image display according to any one of claims 1 to 11, wherein the oblique line portions are located on the dots in all position relationships possibly established by said separating elements and the dots.

13. An image display according to claim 12, wherein a length of a horizontal component between an upper-side portion center and a lower-side portion center of said separating element is equal to a horizontal dot pitch.

14. An image display according to claim 12 or claim 13, wherein a length of a vertical component between a right-side portion center and a left-side portion center of said separating element is equal to a vertical dot pitch.

15. An image display according to any one of claims 1 to 14, wherein the separating element is formed of an aperture.

16. An image display according to any one of claims 1 to 14, wherein the separating element is formed of a lens element.

17. An image display according to claim 2, wherein the number of viewpoints is set to be two, said separating means is formed of a liquid crystal panel and capable of switching between a separation and a non-separation, and as a result of corners of an aperture portion that is the separating element formed in a transparent electrode portion of said liquid crystal panel being cut-off, the oblique line portions exist.
